# EUROPÄISCHE PATENTSCHRIFT

(11) **EP 3 361 860 B1**
(45) Veröffentlichungstag und Bekanntmachung des Hinweises auf die Patenterteilung: **02.12.2020**
(21) Anmeldenummer: 16777999.0
(22) Anmeldetag: 06.10.2016
(51) Int. Cl.: A01K 5/00, A01K 5/01, B65B 67/12

(54) **HEUNETZHALTER**
HAY NET HOLDER
SUPPORT DE FILET À FOIN

(30) Priorität: 12.10.2015 DE 102015117351; 08.12.2015 DE 102015121379
(43) Veröffentlichungstag der Anmeldung: 22.08.2018
(73) Patentinhaber: BAYER Feinwerk GmbH & Co. KG, 78052 VS-Villingen (DE)
(72) Erfinder: HEITER, Uwe, 78052 VS-Villingen (DE)
(74) Vertreter: Patentanwälte und Rechtsanwalt Weiß, Arat & Partner mbB
(86) Internationale Anmeldenummer: PCT/EP2016/073835
(87) Internationale Veröffentlichungsnummer: WO 2017/063934

(56) Entgegenhaltungen:
- DE-U1-202014 000 674
- US-A- 3 653 619
- US-A- 5 154 378

## Beschreibung

Die vorliegende Erfindung betrifft einen Heunetzhalter nach dem Oberbegriff des Anspruchs 1.

### STAND DER TECHNIK

Zu dem Stand der Technik wird auf folgende Druckschriften: DE202014000674U1, DE202012006649U1 und DE202012001400U1 hingewiesen.

Dabei handelt es sich um Vorrichtungen für Heunetze die an einer Stallwand befestigt werden. Diese drei Vorrichtungen können jeweils auf unterschiedliche Weise über einen Rahmen geöffnet und geschlossen werden. Über die jeweils offenbarte Rahmenkonstruktion soll das Befüllen eines Heunetzes mit Halmgut erleichtert werden.

Die drei genannten Konstruktionen weisen jedoch alle mehrere wesentliche Nachteile oder sogar Konstruktionsfehler auf, die folgend genannt werden:
In der DE202014000674U1 werden zwei ein- und ausklappbare Halterelemente für ein Heunetz offenbart. Diese Halterelemente sind sehr scharfkantig und können nicht in ihrer jeweiligen geöffneten bzw. Geschlossenen Position arretiert werden. Zudem ist ein sehr aufwendiges Einfädeln der Heunetzmaschen auf eine Drahtstange nötig.

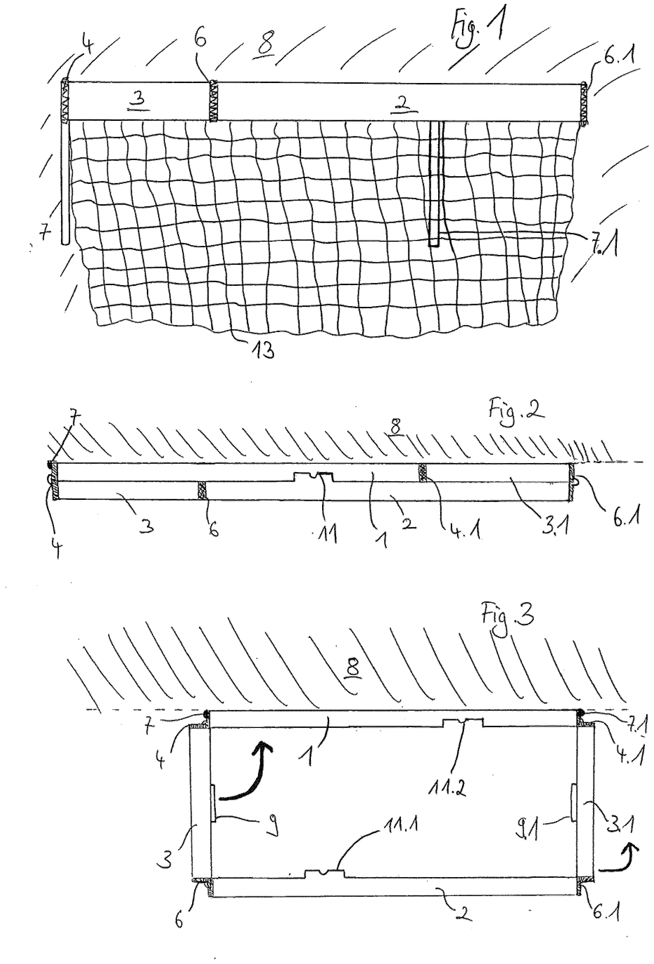

In der DE202012006649U1 wird eine Konstruktion offenbart, die ausschliesslich in einer Ecke einer Stallbox angeordnet werden kann. Diese Konstruktion besteht aus einem rechteckigen Rahmen, der über Scharniere an zwei diagonal gegenüberliegenden Ecken einklappbar sein soll. Auffällig hierbei ist, dass ein Einklappen des rechteckigen Rahmens über die Ecken, siehe Figur 1 und 2, aufgrund der Form bzw. der unterschiedlichen Länge der Seitenkanten nicht möglich ist.

In der DE202012001400U1 wird eine weitere Konstruktion offenbart, die die Befüllung eines Heunetzes mit Halmgut erleichtern soll. Dabei ist jedoch die Hälfte der Rahmenkonstruktion mit einer Stallwand verbunden. Dadurch ist die Einfüllöffnung des Heunetzes um 50 Prozent ihrer potentiellen Grösse verringert. Zudem muss das Heunetz nach der Befüllung mit dem zu schliessenden Rahmen angehoben werden, um die Konstruktion schliessen zu können. Konstruktionsbedingt kann dadurch das Heunetz nicht vollständig befüllt werden und die Befüllung an sich ist vergleichsweise aufwendig.

Weiter wird auf die US 5 154 378 A und die US 3 653 419 A verwiesen, welche jeweils eine klappbare Konstruktion zur Halterung eines Müllbeutels beschreibt.

### OFFENBARUNG DER ERFINDUNG

### AUFGABE

Die Aufgabe der vorliegenden Erfindung ist es, die Nachteile des Standes der Technik zu überwinden. Insbesondere soll eine Vorrichtung bereitgestellt werden, die das Befüllen eines üblichen Heunetzes tatsächlich erleichtert und anwendungstauglich, sicher sowie platzsparend ist.

### LÖSUNG DER AUFGABE

Zur Lösung der Aufgabe führen die Merkmale des Anspruchs 1.

Der erfindungsgemässe Heunetzhalter besteht aus einem über Gelenke beweglichen Rahmen, welcher ein Heunetz aufnimmt und dieses über den beweglichen Rahmen geöffnet und geschlossen werden kann. Dies ermöglicht ein einfaches, schnelles, sicheres Befüllen eines Heunetzes mit Halmgut. Darüber hinaus wird mittels des erfindungsgemässen Heunetzhalters in einer Stallbox, im Vergleich zu sonst üblichen Futterraufen, enorm viel Platz gespart. Zudem wird von den zu fütternden Tieren, wie beispielsweise Pferden, ein Heunetz im Vergleich zu einer metallenen Futterraufe bevorzugt angenommen.

Weiterhin fällt erfahrungsgemäss ein grosser Anteil an Halmgut aus einer Futterraufe hinaus auf den Stallboden, was durch den Einsatz eines Heunetzes weitgehend vermieden wird.

Ein Heunetz ohne Rahmen oder Halterung ist jedoch nur mit sehr viel Aufwand zu befüllen. Dabei fällt erfahrungsgemäss viel Halmgut vorbei auf den Stallboden. Zudem werden einfache Heunetze meist nur an einem Haken oder an Nägeln an einer Stallwand aufgehängt, was ein enormes Verletzungspotential für das zu fütternde Tier bedeutet.

Der Rahmen des Heunetzhalters umfasst ein Wandteil, ein sich daran anschliessendes erstes und zweites Ausklappteile und eine die beiden Ausklappteile miteinander verbindende Metallstrebe.

Die genannten Teile sind aus Metall und weisen ein leistenförmiges U-Profil auf. Die offene Seite des U-Profils bildet die Innenseite des Rahmens.

Das Wandteil wird horizontal an einer Stallwand befestigt. Dies erfolgt bevorzugt mittels geeigneter Schrauben, richtet sich jedoch nach dem Material und der Tragkraft der jeweiligen Stallwand. Beidseitig sind an dem Wandteil Wandgelenke angeordnet. In einem bevorzugten Ausführungsbeispiel handelt es sich jeweils um ein Scharniergelenk oder ein Doppelgelenk.

Eine Installation des Heunetzhalters an einer Aussenwand ist ebenfalls möglich, da nur korrosionsfreie und witterungsbeständige Materialien verwendet werden.

Über die Wandgelenke ist das Wandteil mit dem ersten und dem zweiten Ausklappteil verbunden. In einem einigen bevorzugten Ausführungsbeispielen umfassen die Wandgelenken Abstützelemente. Diese Abstützelemente liegen an der Stallwand an und übernehmen vor allem im ausgeklappten Zustand Stützfunktion für den Heunetzhalter, da gerade beim Befüllen stärkere Belastungen auf den Heunetzhalter ausgeübt werden können. Die Abstützelemente könne aber auch an beliebiger Stelle an dem Wandteil angeordnet sein. Die Anordnung an den Wandgelenken hat konstruktive Vorteile. Auftretende hebelkraftähnliche Belastungen werden durch die beiden Abstützelemente aufgefangen. Dies trägt zur Funktionalität und Langlebigkeit des Heunetzhalters bei.

Andernends der Wandgelenke sind das erste und das zweite Ausklappteil über je ein Metallstrebengelenk, ebenfalls bevorzugt ein Scharniergelenk oder ein Doppelgelenke, mit der Metallstrebe verbunden. Der erfindungsgemässe Heunetzhalter umfasst daher in bevorzugten Ausführungsformen vier Gelenke in Form von Scharnier- oder Doppelgelenken. Es ist aber auch möglich, dass die beiden Ausklappteile in einigen Ausführungsbeispielen jeweils über ein zusätzliches Gelenk verfügen.

Doppelgelenk bedeutet hierbei, dass zwei Drehpunkte vorhanden sind, welche derart miteinander verbunden sind, alsdass die beiden Drehpunkte aneinander schwenkbar oder in definiertem Rahmen beweglich angeordnet sind. Eine einfache Form ist derart, dass ein Doppelgelenk aus zwei zylindrischen Körpern besteht, wobei einer der zylindrischen Körper jeweils einem Bauteil, wie der Wandhalterung, der Metallstrebe oder einem Teil der beiden Ausklappteile angeordnet ist und ein zweiter zylindrischer Körper einem anschliessenden anderen Bauteil angeordnet ist. Der erste zylindrische Körper und der zweite zylindrische Körper ist über ein Verbindungselement derart miteinander verbunden, dass sie sich zueinander bewegen können und ein Verschwenken des einen Bauteils zu dem anderen Bauteil ermöglichen. Die Bauteile weisen bei Bedarf eine auf Gehrung abgetragene Form auf, um die Schwenkbewegung unter Umständen zu stoppen oder zu steuern.

Scharniergelenk bedeutet hierbei hingegen, dass ein Gelenk vorliegt, welches lediglich ein Drehpunkt aufweist.

Die Metallstrebe, die die gleiche Länge wie das Wandteil aufweist, ist im ausgeklappten Zustand des Heunetzhalters parallel zu dieser angeordnet.

Im geschlossenen bzw. zusammengeklappten Zustand des Heunetzhalters liegt die Metallstrebe am Wandteil an und ist zu diesem um die Länge eines Ausklappteils verschoben. Dies liegt daran, dass im zusammengeklappten Zustand eines der beiden Ausklappteile immer nach aussen an die Stallwand geklappt wird, so dass das andere Ausklappteil entsprechend nach innen an das Wandteil geklappt wird. Im zusammengeklappten Zustand wird daher das Wandteil bzw. die Metallstrebe durch ein Ausklappteil einseitig verlängert.

Welches der beiden Ausklappteile nach aussen, das heisst mit seiner Längsseite an die Stallwand geklappt wird und dadurch eine Verlängerung des Wandteils bildet, kann anforderungsentsprechend angepasst werden. Im individuellen Fall bedeutet dies, dass beispielsweise das zweite Ausklappteil nach aussen geklappt wird, mit seiner Längsseite dann wie das Wandteil an beispielsweise einer Stallwand anliegt und dadurch eine Verlängerung des Wandteils bildet. Gleichzeitig klappt entsprechend das erste Ausklappteil nach innen und liegt mit seiner Längsseite an dem Wandteil an und bildet eine Verlängerung der Metallstrebe. Siehe dazu ein Beispiel in Figur 2.

In einigen Ausführungsbeispielen ist die Klapprichtung der beiden Ausklappteile über einen Schalter an den entsprechenden Gelenken einstellbar.

Das Wandteil, die Metallstrebe und die zwei Ausklappteile weisen ausgestanzte Heunetzhaken auf, die zum Einhängen des Heunetzes geeignet sind. Diese Heunetzhaken sind aus der geschlossenen Seite des U-Profils ausgestanzt und zur offenen Seite des U-Profils herausgebogen, so dass sie innerhalb des U-Profils liegen und mit der Hakenöffnung von dem eingehängten Heunetz wegragen. Dadurch entstehen Haken die das Heunetz aufnehmen können. Besonders vorteilhaft ist dabei, dass keine zusätzlichen Teile für die Aufhängung eines Heunetzes angefügt werden müssen, die sich beim Gebrauch sonst lösen könnten. Die Heunetzhaken können auch eine andere zweckmäßige Ausformung aufweisen.

Nach der Erfindung verfügt der Heunetzhalter an der Metallstrebe und dem Wandteil über einen mit einer Hand einfach zu bedienenden Verschluss. Über diesen Verschluss wird die Metallstrebe mit dem Wandteil reversibel verbunden, so dass der Heunetzhalter im geschlossenen Zustand fixiert werden kann. Dies verhindert, dass der Heunetzhalter sich ungewollt, oder etwa durch Bewegungen des zu fütternden Tieres, öffnet. Zudem wird im geschlossenen Zustand des Heunetzhalters kaum Platz in der jeweiligen Stallbox verbraucht.

Damit das Schliessen des Heunetzhalters, zum Bespiel nach einer Befüllung mit Halmgut einfach und problemlos in vorgesehener Weise erfolgt, umfassen in einigen Ausführungsformen die beiden Ausklappteile sogenannte Justierstreifen. Diese Justierstreifen sind an den Innenseite der Ausklappteile angeordnet. Durch diese Anordnung wird sichergestellt, dass die vorgesehene Schliessposition durch das jeweilige Eingreifen der Justierstreifen in die Metallstrebe bzw. das Wandteil eingenommen wird. Dadurch wird unter anderem der Verschluss in die vorgesehene Position geleitet und der Heunetzhalter schliesst zuverlässig und wie vorgesehen. Zudem wird für zusätzliche Stabilität gesorgt, so dass es beispielsweise durch kräftigeres Ziehen am Heunetz mittels eines fressenden Tieres nicht zu Verschränkungen oder Verformungen des Heunetzhalters kommen kann.

Neben den beiden Justierstreifen trägt die Begrenzung der jeweiligen Gelenke in Ihrem maximalem Öffnungswinkel dazu bei, dass es nicht zu einer fehlerhaften Schliessposition kommen kann. Dazu sind die beiden Wandgelenke sowie die beiden Metallstrebengelenke auf einen maximalen Öffnungswinkel von 90° beschränkt. Durch die Beschränkung der maximalen Öffnungswinkel der Gelenke und die Funktion der beiden Justierstreifen, ist gewährleistet, dass das Öffnen und Schliessen des Heunetzhalters einfach, sicher, schnell und fehlerfrei vorgenommen werden kann. Zudem kann die Zusammenklapprichtung je nach Anforderung bei der Installation, und/oder durch die Umstellung der Öffnungswinkel der Gelenke, ausgewählt werden.

Das zu verwendende Heunetz sollte vorzugweise aus zwei flachen Netzen bestehen, die lediglich an drei Seitenlängen vernäht sind. Damit bildet sich ein Heunetz mit einer Breite von vorzugsweise 100 cm und einer Höhe von vorzugsweise 90 cm. Dieses Heunetz würde, eingesetzt in den ausgeklappten Heunetzhalter, eine Öffnung von ca. 65 cm Breite und 35 cm Tiefe ergeben. Dies ermöglicht ein bequemes Befüllen mit Halmgut. Beim Schliessen muss das eingefüllte und unter Umständen noch geballte Halmgut nun nicht mehr verformen bzw. manuell aufgelockert werden, damit der Heunetzhalter geschlossen werden kann.

Durch die erfindungsgemässe Konstruktion ist es darüber hinaus auch möglich unterschiedlich grosse Heunetze zu verwenden, da über die zahlreichen Heunetzhaken fast jedes Heunetz leicht, schnell und passend eingehängt werden kann. Ein aufwendiges und Zeitraubende Einfädeln, wie bei anderen Konstruktionen entfällt. Hierbei können ausserdem Heunetze mit unterschiedlich großen Maschenweiten verwendet werden. Dies ist wichtig um die Fressgeschwindigkeit des Tieres zu bremsen, wobei enge Maschen zu einer langsameren Fressgeschwindigkeit, weite Maschen zu einer schnelleren Fressgeschwindigkeit führen.

Diese Konstruktion ermöglicht es sehr leicht auf verschiedene Heunetzbreiten von beispielsweise 60 cm, 100 cm, 150 cm u.s.w. anwenden zu können, wobei die Anwendung unabhängig von der Heunetztiefe möglich ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Darstellung auf einen geschlossenen Heunetzhalter aus einem horizontalem Blickwinkel.
Figur 2 eine schematische Darstellung auf einen geschlossenen Heunetzhalter aus einem Blickwinkel von oben.
Figur 3 eine schematische Darstellung auf einen geöffneten Heunetzhalter aus einem Blickwinkel von oben.
Figur 4 eine Darstellung eines Querschnitts durch das U-Profil eines Wandteils 1 mit ausgestanztem Heunetzhaken 20.
Figur 5 eine schematische Darstellung auf einen nichterfindungsgemässen geöffneten Heunetzhalter aus einem Blickwinkel schräg von oben.
Figur 6 eine schematische Darstellung auf einen nichterfindungsgemässen geschlossenen Heunetzhalter aus einem Blickwinkel schräg von oben.

In Figur 1 ist ein erfindungsgemässer Heunetzhalter in einem geschlossenen Zustand dargestellt. Die Darstellung erlaubt einen Blick auf eine Metallstrebe 2 und ein erstes Ausklappteil 3. Die Metallstrebe 2 und das erstes Ausklappteil 3 sind über ein Metallstrebengelenk 6 miteinander verbunden. Weiterhin ist ein Wandgelenk 4 dargestellt. Das Wandgelenk 4 verbindet einerseits das erste Ausklappteil 3 mit einem verdeckten Wandteil 1. Andererseits verbindet eine Metallstrebengelenk 6.1 die Metallstrebe 2 mit einem verdeckten Auskappteil 3.1, welches wiederum über ein, ebenfalls verdecktes Wandgelenk 4.1, mit dem Wandteil 1 verbunden ist.

Weiterhin ersichtlich sind zwei Abstützelemente 7 und 7.1. Das Abstützelement 7 ist mit dem Wandgelenk 4 verbunden, das Abstützelement 7.1 ist hingegen mit dem verdeckten Wandgelenk 4.1 verbunden und dadurch nur durch ein Heunetz 13 hindurch ersichtlich. Die beiden Abstützelemente 7 und 7.1 liegen an einer Stallwand 8 in senkrechter Position zum Wandteil 1 an.

Zudem ist hier beispielhaft das Heunetz 13 im eingehängten und unbefüllten Zustand dargestellt.

In Figur 2 ist ein erfindungsgemässer Heunetzhalter in einem geschlossenen Zustand dargestellt.

Im geschlossenen Zustand dieses Ausführungsbeispiels eines erfindungsgemässen Heunetzhalters liegen das Wandteil 1 und die Metallstrebe 2 mit ihren Innenseiten, offene Seite des U-Profils, um die Länge des ersten Ausklappteils 3 verschoben nebeneinander. In dieser geschlossenen Position liegt das erste Ausklappteil 3 mit seiner Längsseite an dem Wandteil 1 an. Das zweite Ausklappteil 3.1 liegt hingegen mit seiner Längsseite an der Stallwand 8 an. Dies bedeutet, dass das zweite Ausklappteil 3.1 eine Verlängerung des Wandteils 1 bildet, und dass das erste Ausklappteil 3 entsprechend eine Verlängerung der Metallstrebe 2 darstellt.

Zudem ist eine Ausführungsform eines Verschlusses 11 dargestellt. Dieser Verschluss 11 verbindet die Metallstrebe 2 mit dem Wandteil 1 reversibel und liegt im geschlossenen Zustand des Heunetzhalters in dessen Mitte. Diese Mitte bezieht sich auf die Länge des Heunetzhalters, welche der Summe der Längen von dem Wandteil 1 und dem zweiten Ausklappteil 3.1, bzw. von der Metallstreben 2 und dem ersten Ausklappteil 3 entspricht.

In Figur 3 ist ein erfindungsgemässer Heunetzhalter in einem geöffneten Zustand dargestellt.

Der erfindungsgemässe Heunetzhalter ist über das Wandteil 1 an einer nur andeutungsweise dargestellten Stallwand 8 angebracht. In diesem Ausführungsbeispiel verfügt das erste Ausklappteil 3 über einen Justierstreifen 9 und das zweite Ausklappteil 3.1 über einen Justierstreifen 9.1. Diese beiden Justierstreifen 9 und 9.1 sind an der oberen Kante der Innenseite der beiden Ausklappteile 3 bzw. 3.1 an zentraler Position angeordnet.

Das Wandgelenk 4 umfasst das Abstützelement 7, das Wandgelenk 4.1 umfasst das Abstützelement 7.1. Diese beiden Abstützelemente 7 und 7.1 sind senkrecht und unterhalb des Wandteils 1 bzw. der Wandgelenke 4 und 4.1 an der Stallwand 8 angeordnet.

Über das Wandgelenk 4 ist das erste Ausklappteil 3 und über das Wandgelenk 4.1 ist die zwei Ausklappteile 3.1 an das Wandteil 1 angefügt. Die Wandgelenke 4 und 4.1 haben einen maximalen Öffnungswinkel von 90°.

Das erste und das zweite Ausklappteil 3 und 3.1 sind beide gleich lang, aber jeweils kürzer als das Wandteil 1 bzw. die Metallstrebe 2.
Das erste Ausklappteile 3 ist über das Metallstrebengelenke 6 und das zweite Ausklappteil 3.1 über Metallstrebengelenke 6.1 mit der Metallstrebe 2 verbunden. Die Metallstrebengelenke 6 und 6.1 weisen einen maximalen Öffnungswinkel von 90° auf.

Die Metallstrebe 2 hat die gleichen Abmessungen wie das Wandteil 1. Ausserdem verfügt die Metallstrebe 2 an ihrer nach innen gerichteten Seite, der offenen Seite des U-Profils, über ein erstes Verschlussteil 11.1, welcher in eine entsprechendes zweites Verschlussteil 11.2 des Wandteils 1 eingreifen kann. Das erste Verschlussteil 11.1 und das zweite Verschlussteil 11.2 sind jeweils derart auf der Metallstrebe 2 bzw. dem Wandteil 1 angeordnet, dass sie im geschlossenen Zustand des Heunetzhalters ineinandergreifen und dann in der Mitte des Heunetzhalters den Verschluss 11 bilden, siehe Figur 2.

Je nach Anwendungsgebiet und räumlichen Möglichkeiten des Stalls oder der Stallbox können hier Variationen in der Ausführung durchaus denkbar sein. Die Metallstrebe 2 kann in weiteren Ausführungsformen zwei Metallstrebenlamellen 10 und 10.1 verfügen. Diese sind dann ebenfalls an der oberen Kante der Innenseite der Metallstrebe 2 angeordnet.

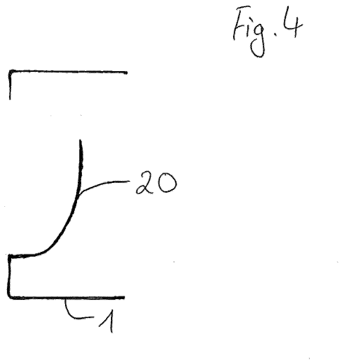

In Figur 4 ist einen Querschnitt durch das U-Profil des Wandteils 1 zu sehen. Das Wandteil 1, die beiden Ausklappteile das 3 und 3.1 und die Metallstrebe 2 weisen gemeinsam ein solches U-Profil auf, es könnte sich bei der Abbildung daher genauso gut um einen Querschnitt durch das U-Profil der Metallstrebe 2 oder des ersten oder des zweiten Ausklappteils 3 und 3.1 handeln.

Gezeigt ist ein Heunetzhaken 20. Dieser ist in diesem Ausführungsbeispiel aus der geschlossenen Seite des U-Profils ausgestanzt und zur offenen Seite des U-Profils herausgebogen, so dass der Heunetzhaken 20 innerhalb des U-Profils liegen und mit der Hakenöffnung von dem eingehängten Heunetz 13 wegragt.

Das Wandteil 1, das erste und das zweite Ausklappteil 3 und 3.1 und die Metallstrebe 2 weisen jeweils in kurzen Abständen nebeneinander angeordnete Heunetzhaken 20 auf. Diese Heunetzhaken 20 sind nach innen in Richtung der offenen Seite des U-Profils ausgerichtet und liegen innerhalb des U-Profils.

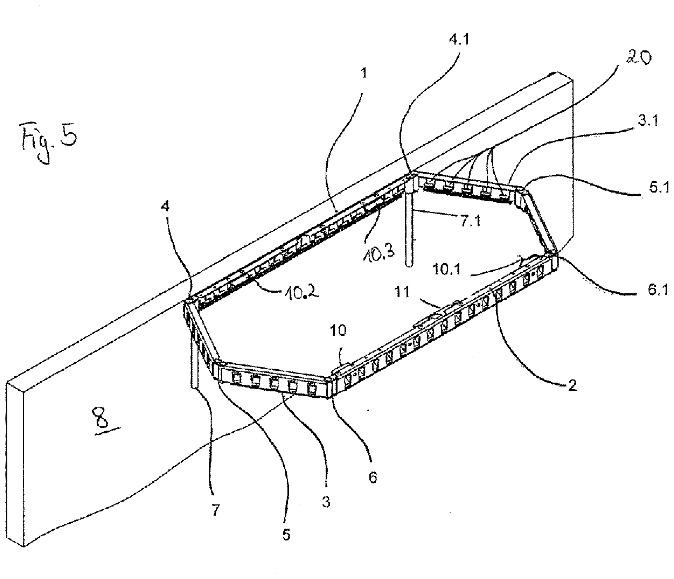

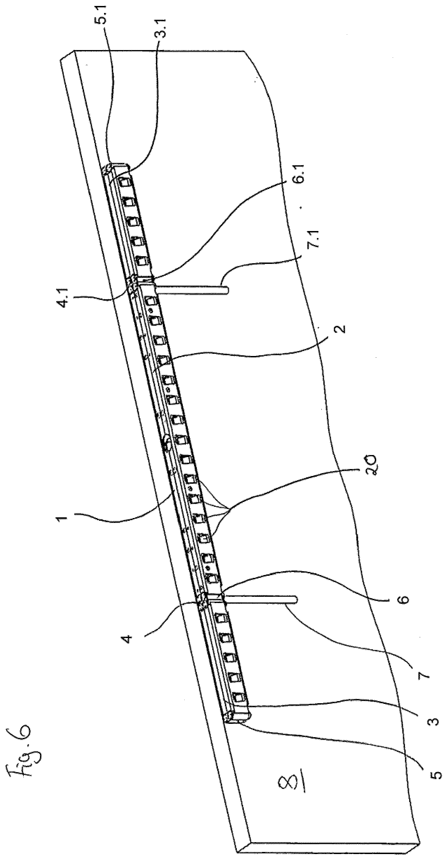

In bevorzugten Ausführungsbeispielen sind jeweils an dem Wandteil 1 und der Metallstrebe 2 nach innen, zur offenen Seite des U-Profils, gerichtete Heunetzhaken 20 angeordnet, an den beiden Ausklappteilen 3 und 3.1 jeweils. Diese Heunetzhaken 20 sind insbesondere auch in Figur 5 und 6 noch einmal dargestellt.

In der Figur 5 ist ein weiteres nicht-erfindungsgemässes Ausführungsbeispiel des Heunetzhalters dargestellt. Der nicht erfindungsgemässe Heunetzhalter ist über das Wandteil 1 an der nur andeutungsweise dargestellten Stallwand 8 angebracht. Das Wandteil 1 verfügt in diesem Ausführungsbeispiel über zwei Wandteillamellen 10.2 und 10.3. Diese Wandteillamellen 10.2 und 10.3 sind an der oberen Kante der Innenseite des Wandteils 1 auf Höhe des dritten und vierten Heunetzhakens 20, jeweils von aussen gezählt, angeordnet.

Die Metallstrebe 2 hat die gleichen Abmessungen wie das Wandteil 1. Ausserdem verfügt die Metallstrebe 2 an ihrer nach innen gerichteten Mitte, der offenen Seite des U-Profils, über einen Verschluss 11. Auch die Metallstrebe 2 verfügt über zwei Metallstrebenlamellen 10 und 10.1. Diese Metallstrebenlamellen sind ebenfalls an der oberen Kante der Innenseite der Metallstrebe 2 auf Höhe des ersten und zweiten Heunetzhakens 20, jeweils von aussen gezählt, angeordnet.

Eine weitere Wesentlichkeit an diesem Ausführungsbeispiel ist, dass das erste Ausklappteil 3 und das zweite Ausklappteil 3.1 jeweils in ihrer Mitte ein zusätzliches Schwenkgelenk 5 und 5.1 aufweisen, wodurch jeweils zwei gleichlange Schenkel gebildet werden. Die beiden Schwenkgelenke 5 und 5.1 weisen einen maximalen Öffnungswinkel von 180° auf. Dies führt dazu, dass der Heunetzhalter in diesem Ausführungsbeispiel derart zusammengelappt wird, dass das Wandteil 1 und die Metallstrebe 2 deckungsgleich über ihre Länge aneinander anliegen und nicht zueinander verschoben sind.

In diesem Ausführungsbeispiel sind die ausgestanzten und nach innen gebogenen Heunetzhaken 20 gut ersichtlich. Die beiden Ausklappteile 3 und 3.1 verfügen in diesem Ausführungsbeispiel nicht über die Justierstreifen 9 und 9.1.

In Figur 6 ist der nicht erfindungsgemässer Heunetzhalter aus der Figur 5 in einem geschlossenen Zustand dargestellt.

Im geschlossenen Zustand liegen das Wandteil 1 und die Metallstrebe 2 mit ihren Innenseiten, offene Seite des U-Profils, deckungsgleich nebeneinander, so dass die Wandgelenke 4 und 4.1 an den Metallstrebegelenken 6 und 6.1 anliegen. In dieser geschlossenen Position sind die beiden Ausklappteile 3 und 3.1 über ihr jeweiliges Schwenkgelenke 5 und 5.1 derart zusammengeklappt, dass ihre beiden Schenkel an ihren jeweiligen Innenseiten aneinander liegen.

**Bezugszeichenliste**

| | | | |
|---|---|---|---|
| 1 | Wandteil | 33 | |
| 2 | Metallstrebe | 34 | |
| 3 | erstes Ausklappteil | 35 | |
| 3.1 | zweites Ausklappteil | 36 | |
| 4, 4.1 | Wandgelenk | 37 | |
| 5, 5.1 | Schwenkgelenk | 38 | |
| 6, 6.1 | Metallstrebengelenk | 39 | |
| 7, 7.1 | Abstützelement | 40 | |
| 8 | Stallwand | 41 | |
| 9 | erster Justierstreifen | 42 | |
| 9.1 | zweiter Justierstreifen | 43 | |
| 10, 10.1, | Metallstrebenlamelle | 44 | |
| 10.2, 10.3 | Wandteillamelle | 45 | |
| 11 | Verschluss | 46 | |
| 11.1, | erstes Verschlussteil | 47 | |
| 11.2 | zweites Verschlussteil | 48 | |
| 13 | Heunetz | 49 | |
| 20 | Heunetzhaken | 50 | |
| 15 | | 51 | |
| 16 | | 52 | |
| 17 | | 54 | |
| 18 | | 55 | |
| 19 | | 56 | |
| 21 | | 57 | |
| 22 | | 58 | |
| 23 | | 59 | |
| 24 | | 60 | |
| 25 | | 61 | |
| 26 | | 62 | |
| 27 | | 63 | |
| 28 | | 64 | |
| 29 | | 65 | |
| 30 | | | |
| 31 | | | |
| 32 | | | |

## Patentansprüche

1. Heunetzhalter bestehend aus genau einem Wandteil (1) und mit einem ersten Ausklappteilen (3) und einem zweiten Ausklappteil (3.1) und einer die beiden Ausklappteile (3, 3.1) miteinander verbindenden Metallstrebe (2), wobei die beiden Ausklappteile (3, 3.1) einends jeweils mit dem Wandteil (1) über ein Wandgelenk (4, 4.1) verbunden sind und andernends jeweils mit der Metallstrebe (2) verbunden sind und Heunetzhaken (20) zur Halterung eines Heunetzes (13) aufweisen und das Wandteil (1) und die Metallstrebe (2) die gleiche Länge aufweisen,
**dadurch gekennzeichnet,**
**dass** das zweite Ausklappteil (3.1) einerseits in die Verlängerung des Wandteils (1) klappbar ist und das erste Ausklappteil (3) andererseits in die Verlängerung der Metallstrebe (2) klappbar ist, wobei das Wandteil (1) und die Metallstrebe (2) versetzt zueinander anordenbar sind, wobei ein Verschluss (11) umfasst ist, wobei der Verschluss (11) die Metallstrebe (2) an dem Wandteil (1) reversibel festlegen kann, wobei der Verschluss (11) aus einem ersten Verschlussteil (11.1) und einem zweiten Verschlussteil (11.2) besteht, wobei das erste Verschlussteil (11.1) an der Metallstrebe (2) ausgebildet ist und das zweite Verschlussteil (11.2) an dem Wandteil (1) ausgebildet ist, wobei die Metallstrebe (2) ein U-profil aufweist und die Metallstrebe (2) verfügt an ihrer nach innen gerichteten Seite, der offenen Seite des U-Profils, über das erste Verschlussteil (11.1), welcher in das entsprechende zweite Verschlussteil (11.2) des Wandteils (1) eingreift und das erste Verschlussteil (11.1) und das zweite Verschlussteil (11.2) sind jeweils derart auf der Metallstrebe (2) bzw. dem Wandteil (1) angeordnet, dass sie im geschlossenen Zustand des Heunetzhalters ineinandergreifen.

2. Heunetzhalter nach Anspruch 1, **dadurch gekennzeichnet, dass** an den Wandgelenken (4, 4.1) je ein Abstützelement (7, 7.1) umfasst ist.

3. Heunetzhalter nach einem der vorigen Ansprüche, **dadurch gekennzeichnet, dass** das erste und das zweite Ausklappteil(3, 3.1) über je ein Metallstrebengelenk (6, 6.1) mit der Metallstrebe (2) verbunden sind und es sich bei den Wandgelenken (4, 4.1) und den Metallstrebengelenken (6, 6.1) um Scharniergelenke handelt.

4. Heunetzhalter nach einem der vorigen Ansprüche, **dadurch gekennzeichnet, dass** das Wandteil (1), die Metallstrebe (2) und das erste und zweite Ausklappteil (3, 3.1) ausgestanzte Heunetzhaken (20) aufweisen, geeignet zum Einhängen des Heunetzes (13).

5. Heunetzhalter nach einem der vorigen Ansprüche, **dadurch gekennzeichnet, dass** das erste Ausklappteil (3) einen ersten Justierstreifen (9) und das zweite Ausklappteil (3.1) einen zweiten Justierstreifen (9.1) aufweist, wobei der erste Justierstreifen (9) des ersten Ausklappteils (3) in geschlossenem Zustand in das Wandteil (1) eingreift und der zweite Justierstreifen (9.1) des zweiten Ausklappteils (3.1) in die Metallstrebe (2) eingreift.

## Claims

1. A hay net holder consisting of exactly one wall part (1) and having a first fold-out part (3) and a second fold-out part (3.1) and a metal strut (2) connecting the two fold-out parts (3, 3.1) to one another, whereby the two fold-out parts (3, 3.1) are each connected at one end to the wall part (1) via a wall joint (4, 4.1) and at the other end to the metal strut (2) and have hay net hooks (20) for holding a hay net (13) and the wall part (1) and the metal strut (2) are of the same length,
**characterized in,**
**that** the second fold-out part (3.1), on the one hand, can be folded into the extension of the wall part (1) and the first fold-out part (3), on the other hand, can be folded into the extension of the metal strut (2), whereby the wall part (1) and the metal strut (2) are arrangeable offset with relative to one another, wherein a closure (11) is included, whereby it is possible for the closure (11) to fix the metal strut (2) reversibly to the wall part (1), whereby the closure (11) comprises a first closure part (11.1) and a second closure part (11.2), whereby the first closure part (11.1) is formed on the metal strut (2) and the second closure part (11.2) is formed on the wall part (1), wherein the metal strut (2) has a U-profile and the metal strut (2) has on its inwardly directed side, the open side of the U-profile, the first closure part (11.1) which engages in the corresponding second closure part (11.2) of the wall part (1), and the first closure part (11.1) and the second closure part (11.2) are respectively arranged on the metal strut (2) or the wall part (1) in such a way that they engage in one another in when the hay net holder is closed.

2. Hay net holder according to claim 1, **characterized in that** a supporting element (7, 7.1) is enclosed on each of the wall joints (4, 4.1).

3. Hay net holder according to one of the previous claims, **characterized in that** the first and second fold-out part (3, 3.1) are each connected to the metal strut (2) via a metal strut joint (6, 6.1) and the wall joints (4, 4.1) and the metal strut joints (6, 6.1) are hinge joints.

4. Hay net holder according to one of the previous claims, **characterized in that** the wall part (1), the metal strut (2) and the first and second fold-out part (3, 3.1) have punched-out hay net hooks (20) suitable for hanging up the hay net (13).

5. Hay net holder according to one of the previous claims, **characterized in that** the first fold-out part (3) has a first adjustment strip (9) and the second fold-out part (3.1) has a second adjustment strip (9.1), whereby the first adjustment strip (9) of the first fold-out part (3) engaging in the wall part (1) in the closed state and the second adjustment strip (9.1) of the second fold-out part (3.1) engaging in the metal strut (2).

## Revendications

1. Support de filet à foin composé d'exactement une partie de paroi (1) et avec une première partie dépliable (3) et une deuxième partie dépliable (3.1) et une entretoise métallique (2) connectant les deux parties dépliables (3, 3.1) l'une à l'autre, dans lequel les deux parties dépliables (3, 3.1) sont connectées, chacune, à une extrémité à la partie de paroi (1) par l'intermédiaire d'une articulation de paroi (4, 4.1) et sont connectées, chacune, à l'autre extrémité à l'entretoise métallique (2) et présentent des crochets de filet à foin (20) pour supporter un filet à foin (13) et la partie de paroi (1) et l'entretoise métallique (2) présentent la même longueur,
**caractérisé par le fait**
**que** la deuxième partie dépliable (3.1), d'une part, peut être dépliée dans le prolongement de la partie de paroi (1) et que, d'autre part, la première partie dépliable (3) peut être dépliée dans le prolongement de l'entretoise métallique (2), où la partie de paroi (1) et l'entretoise métallique (2) peuvent être disposées de manière décalée l'une par rapport à l'autre, où est incluse une obturation (11), où l'obturation (11) peut fixer de manière réversible l'entretoise métallique (2) à la partie de paroi (1), où l'obturation (11) se compose d'une première partie d'obturation (11.1) et d'une deuxième partie d'obturation (11.2), où la première partie d'obturation (11.1) est réalisée sur l'entretoise métallique (2) et la deuxième partie d'obturation (11.2) est réalisée sur la partie de paroi (1), où l'entretoise métallique (2) présente un profil en "U" et l'entretoise métallique (2) dispose, sur son côté orienté vers l'intérieur du côté ouvert du profil en "U", de la première partie d'obturation (11.1) qui s'engage dans la deuxième partie d'obturation correspondante (11.2) de la partie de paroi (1) et la première partie d'obturation (11.1) et la deuxième partie d'obturation (11.2) sont disposées, chacune, sur l'entretoise métallique (2) ou la partie de paroi (1) de sorte qu'elles s'engagent l'une dans l'autre à l'état fermé du support de filet à foin.

2. Support de filet à foin selon la revendication 1, **caractérisé par le fait que** sur chacune des articulations de paroi (4, 4.1) est inclus un élément d'appui (7, 7.1).

3. Support de filet à foin selon l'une des revendications précédentes, **caractérisé par le fait que** la première et la deuxième partie dépliable (3, 3.1) sont connectées, chacune, par l'intermédiaire d'une articulation d'entretoise métallique (6, 6.1) à l'entretoise métallique (2) et qu'il s'agit, pour les articulations de paroi (4, 4.1) et les articulations d'entretoise métallique (6, 6.1), d'articulations à charnière.

4. Support de filet à foin selon l'une des revendications précédentes, **caractérisé par le fait que** la partie de paroi (1), l'entretoise métallique (2) et la première et la deuxième partie dépliable (3, 3.1) présentent des crochets de filet à foin découpés (20) aptes à accrocher le filet à foin (13).

5. Support de filet à foin selon l'une des revendications précédentes, **caractérisé par le fait que** la première partie dépliable (3) présente une première bande de réglage (9) et que la deuxième partie dépliable (3.1) présente une deuxième bande de réglage (9.1), dans lequel la première bande de réglage (9) de la première partie dépliable (3) s'engage, à l'état fermé, dans la partie de paroi (1) et la deuxième bande de réglage (9.1) de la deuxième partie dépliable (3.1) s'engage dans l'entretoise métallique (2).
